# EUROPÄISCHE PATENTSCHRIFT

(11) **EP 3 872 012 B1**
(45) Veröffentlichungstag und Bekanntmachung des Hinweises auf die Patenterteilung: **03.04.2024**
(21) Anmeldenummer: 21158705.0
(22) Anmeldetag: 23.02.2021
(51) Int. Cl.: B65G 67/08

(54) **EINRICHTUNG ZUM BE- UND ENTLADEN EINES EINE LADEFLÄCHE AUFWEISENDEN NUTZFAHRZEUGS**
LOADING AND UNLOADING DEVICE FOR A COMMERCIAL VEHICLE COMPRISING A LOADING PLATFORM
DISPOSITIF DE CHARGEMENT ET DE DÉCHARGEMENT D'UN VÉHICULE UTILITAIRE COMPRENANT UNE ZONE DE CHARGEMENT

(30) Priorität: 26.02.2020 DE 102020105056
(43) Veröffentlichungstag der Anmeldung: 01.09.2021
(73) Patentinhaber: KolliWaver GmbH, 44536 Lünen (DE); Schier, Alexander, 77654 Offenburg (DE); Schier, Jan Luca, 42587 Remscheid (DE); Schier, Tamara, 42587 Remscheid (DE)
(72) Erfinder: SCHIER, Manfred, 42857 Remscheid (DE)
(74) Vertreter: Dantz, Jan Henning

(56) Entgegenhaltungen:
- EP-A2- 1 759 990
- WO-A1-2014/174005
- CN-A- 104 176 517
- DE-A1- 3 151 402
- US-A1- 2004 033 126

## Beschreibung

Zum Be- und Entladen eines Nutzfahrzeuges oder eines Containers kommen bislang Hubgeräte, wie Gabelstapler, Hubwagen oder dergleichen zum Einsatz, die personengeführt sind und mit denen jeweils Transportbehälter, wie auf Transportpaletten gehaltene Umkartons, Boxen oder dergleichen auf die Ladefläche eines Nutzfahrzeuges bringbar sind oder davon entnommen werden soll.

Insbesondere dann, wenn Gefriergut be- oder entladen werden soll, ergeben sich hinsichtlich der körperlichen Belastung der das Hubgerät führenden Person allergrößte Probleme, da diese sich in Kühlräumen mit Temperaturen bewegen muss, die gewährleisten, dass die Kühlkette nicht unterbrochen wird.

Diese äußerst beschwerlichen Arbeitsbedingungen stellen eine erhebliche gesundheitliche Gefährdung dar.

Unabhängig davon, ist auch die Beschickung bzw. Entnahme des Nutzfahrzeuges, d.h. eines Lkws, zeitaufwändig und steht den gestellten Forderungen nach einer rationellen Arbeitsweise entgegen.

Zwar ist schon versucht worden, diese Arbeitsabläufe zu automatisieren, jedoch sind bislang keine Einrichtungen bekannt, die in zufriedenstellender Weise einsatzfähig wären.

Hierzu zählt insbesondere, dass die beispielsweise Beladung des Nutzfahrzeuges mit vereinzelten Transportbehältern nicht vorgesehen ist. Vielmehr wird immer eine gleiche vorgegebene Anzahl von Transportbehältern, die auf Transportbahnen verschieblich gelagert sind, bewegt.

Darüber hinaus ist die Positionierung der Transportbehälter auf der Ladefläche des Nutzfahrzeuges nur mit einem erheblichen Arbeitsaufwand möglich, insbesondere dann, wenn die Ladefläche lediglich teilbelegt werden muss oder bereits teilbelegt ist, um anschließend weitere Transportbehälter auf der Ladefläche zu platzieren.

Alles in allem stehen die bisherigen Möglichkeiten des Be- und Entladens eines Nutzfahrzeuges den gestellten Anforderungen an ein rationelles Arbeiten entgegen.

Dies betrifft auch Einrichtungen zum Be- und Entladen eines Nutzfahrzeuges wie sie aus der CN 107 934 595 A, der DE 199 35 072 A1 sowie der WO 2019/178260 A1 bekannt sind.

In der EP 1 759 990 A2, welche eine Einrichtung zum Be- und Entladen nach dem Oberbegriff des Anspruchs 1 offenbart, ist eine Einrichtung zum Be- und Entladen von Stückgut, insbesondere Gepäckstücke in einem Laderaum eines Flugzeuges thematisiert.

Dabei ist eine Förderbahn auf einem verfahrbaren Fahrzeug gehalten und eine Hubeinrichtung in einem vorbestimmten Winkelbereich in horizontaler Ebene verschwenkbar.

Der Erfindung liegt die Aufgabe zugrunde, eine Einrichtung der gattungsgemä-ßen Art so weiterzuentwickeln, dass eine weitgehend automatisierte Be- und Entladung des Nutzfahrzeuges möglich ist.

Diese Aufgabe wird durch eine Einrichtung mit den Merkmalen des Anspruchs 1 gelöst.

Eine solche Einrichtung ermöglicht nun ein Be- und Entladen quasi ohne wesentliche personalisierte Tätigkeit, wobei die Steuerung der Einrichtung über Sensoren erfolgen kann und/oder über Eingabe in einen Rechner.

Damit wird erreicht, dass die beschriebenen Belastungen durch die Arbeiten insbesondere in klimatisch ungünstigen Räumen, insbesondere in Kühlräumen oder dergleichen, nun nicht mehr auftreten, was naturgemäß auch zu einer deutlichen Kostenreduzierung beiträgt.

Gemäß der Erfindung weist die Einrichtung nach Anspruch 1 eine verfahrbare Förderbahn auf, in deren einem Endbereich ein in Längsrichtung relativ dazu bewegbares Schubgestell gehalten ist, das eine Hubeinrichtung trägt, die quer zur Längserstreckung der Förderbahn bewegbar ist, wobei diese Hubeinrichtung in horizontaler Ebene verschwenkbar ist, so dass das jeweilige Transportbehältnis auf die Ladefläche setzbar ist

Hierzu kann die Hubeinrichtung mit Gabelzinken versehen sein, die in an sich bekannter Weise die Transportpalette untergreifen und anheben. Durch Verschwenken in horizontaler Ebene wird das Transportbehältnis von einer Position auf der Förderbahn hin zur Ladefläche verbracht und dort abgesenkt.

Da die quaderförmigen Transportbehältnisse vielfach eine rechteckige Grundfläche aufweisen, mit unterschiedlich langen Seitenkanten, so dass, je nach Erfordernis, durch die Platzverhältnisse der Ladefläche ein Verdrehen um 90° der Transportbehältnisse in horizontaler Ebene erforderlich ist, ist des Weiteren eine entsprechende Schwenkeinrichtung, beispielsweise in Form eines Drehtellers, zwischen der Förderbahn und der Hubeinrichtung vorgesehen.

Zum behinderungsfreien Verschwenken des quaderförmigen Transportbehältnisses ist die Hubeinrichtung sowohl in Längsrichtung der Förderbahn wie auch quer dazu relativ verfahrbar. Hierzu ist das Schubgestell, auf dem die Hubeinrichtung quer beweglich gehalten ist, längs verschieblich in der Förderbahn gelagert, wozu Längsholme des Schubgestells in Längsführungen der Förderbahn geführt sind.

Zur Querverschiebung der Hubeinrichtung weist das Schubgestell an seinem freien Ende Schienen auf, auf denen entlang die Hubeinrichtung angetrieben bewegbar ist.

Ebenfalls angetrieben bewegbar ist das Schubgestell, vorzugsweise rechnergesteuert ebenso wie sämtliche Bewegungen der Hubeinrichtung und eine angetriebene Bewegung der Förderbahn in Längsrichtung.

An den Außenseiten der Längsführungen der Förderbahn sind Dämpfungsglieder vorgesehen, die in Funktion an den sich gegenüberliegenden Seitenwänden der Ladefläche anliegen, so dass eine Ausrichtung der Förderbahn in einem geringen Maße möglich ist, wenn die Ladefläche nicht exakt mit der Förderbahn fluchtet.

Nach einem weiteren Gedanken der Erfindung ist eine ortsfeste Transportbahn vorgesehen, über die Transportbehälter, insbesondere solche, die als Unterbau eine Transportpalette aufweisen, der Förderbahn zugeführt werden.

Die Verfahrlänge der Förderbahn ist abhängig vom Platzangebot auf der Ladefläche. D.h., bei bereits platzierten Transportbehältern auf der Ladefläche wird die Förderbahn nur so weit verfahren, dass sich die zu beladenden Transportbehälter unmittelbar an die bereits vorhandenen anschließen.

Des Weiteren kann zwischen der ortsfesten Transportbahn und der Förderbahn eine über einen eigenen Antrieb in Transportrichtung verfahrbare Zwischenbahn vorgesehen sein, die von der ortsfesten Transportbahn übernommene Transportbehälter zur Förderbahn transportiert, wobei diese Zwischenbahn außerhalb der Ladefläche schienengeführt ist und im Bereich der Ladefläche mittels Dämpfungsgliedern, die an seitlichen Flächen der Ladefläche anliegend geführt ist. Die Zwischenbahn fungiert somit sozusagen als Zubringer.

Zur Bestückung mehrerer nebeneinander angeordneter Ladeflächen wird die Einrichtung nach Anspruch 1 quer zur Längserstreckung der Förderbahn verschoben. Hierzu werden die Schienen, mittels der die Zwischenbahn bis zur Ladefläche geführt wird, verschoben. Dabei sind diese Schienen auf einem Schlitten gehalten, der entlang eines zweiten Schienenpaares vom Bestückungsbereich der einen zum Bestückungsbereich der anderen Ladefläche verschoben werden kann, unter Mitnahme der erfindungsgemäßen Einrichtung. Jeder Ladefläche ist eine ortsfeste und eine Zwischenbahn zugeordnet, während die Einrichtung mit der Förderbahn und der Hubeinrichtung zur Bestückung der mehreren Ladeflächen zum Einsatz kommt.

Eine weitere Variante der Erfindung sieht vor, dass unter Verzicht auf die Zwischenbahn die Förderbahn mit angeschlossenem Schubgestell und Hubeinrichtung zumindest bereichsweise unter die ortsfeste Transportbahn verschiebbar ist.

Da die Förderbahn, je nach Verschiebelänge, die Transportbahn unterfährt, also ein anderes Höhenniveau aufweist als die Transportbahn, müssen die auf der Transportbahn befindlichen Transportbehälter umgesetzt werden, wozu ein Umsetzer vorgesehen ist, der Spann- oder Greifelemente aufweist, mit denen der jeweilige Transportbehälter von der Transportbahn zur Förderbahn umgesetzt werden kann.

Diese Greif- oder Spannelemente sind vertikal verschiebbar, um die Niveaudifferenz zwischen der Transportbahn und der Förderbahn auszugleichen.

Des Weiteren ist der Umsetzer auch in Längsrichtung verschiebbar, bevorzugt auf Schienen geführt, um vom Überdeckungsbereich mit Transportbahn in den Überdeckungsbereich der Förderbahn zu gelangen.

Bevorzugt sind sowohl die Transportbahn wie auch die Förderbahn als Rollenbahn ausgebildet, wobei zumindest ein Teil der Rollen angetrieben wird. Denkbar ist jedoch auch beide Bahnen oder jeweils eine als Kettenförderer auszubilden. Die Ausgestaltung der Transportbahn und der Förderbahn sind je nach Anforderung auszuwählen. Der Antrieb der Förderbahn zu deren Längsverschiebung erfolgt motorisch, vorzugsweise elektromotorisch, wobei sich die Förderbahn mittels Laufrollen am Untergrund abstützt, ebenso wie die Zwischenbahn.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:

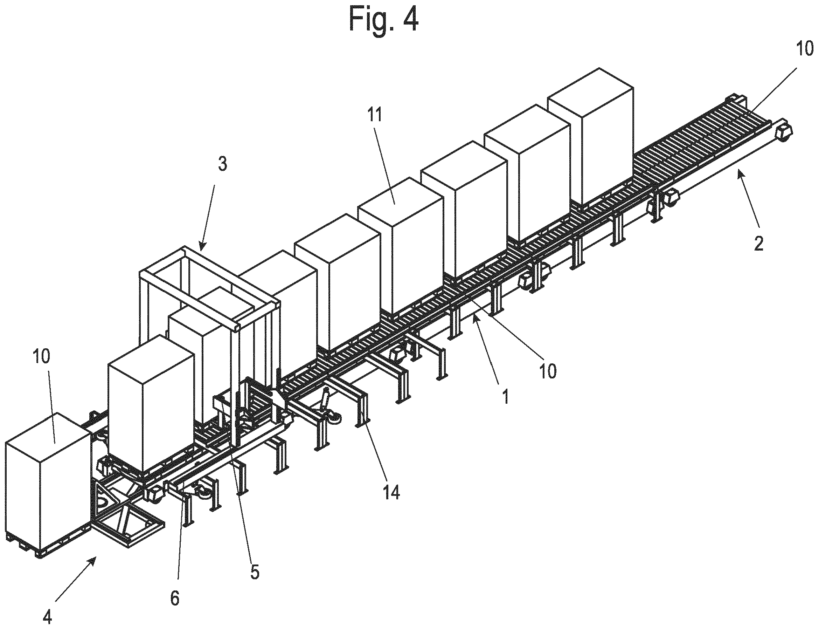

- Figuren 1-8: ein Ausführungsbeispiel einer erfindungsgemäßen Einrichtung jeweils in unterschiedlichen Funktionsstellungen in perspektivischer Ansicht
- Figuren 9-12: ein weiteres Ausführungsbeispiel der erfindungsgemäßen Einrichtung, gleichfalls in unterschiedlichen Funktionsstellungen schaubildlich dargestellt.

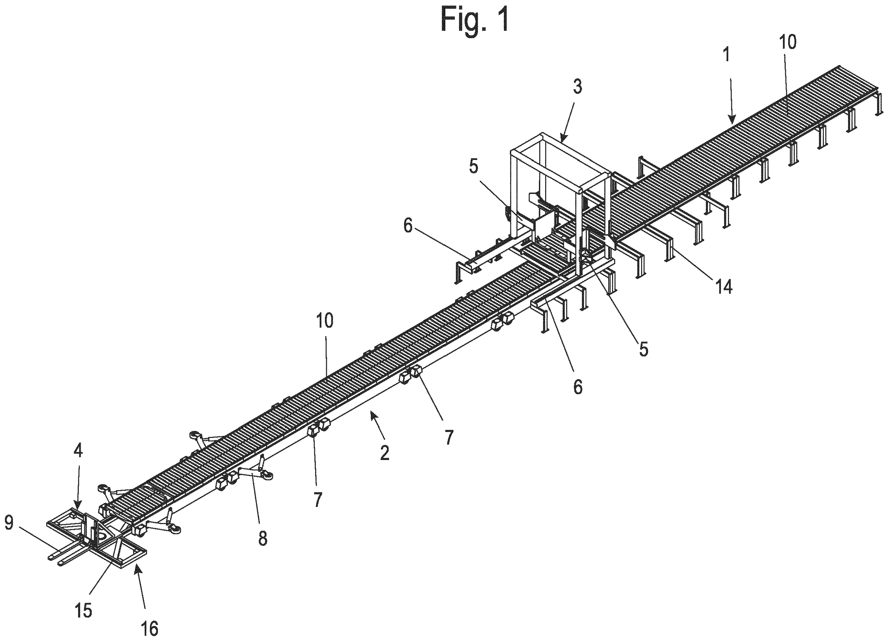

In der Figur 1 ist eine Einrichtung nach der Erfindung abgebildet, mit einer ortsfesten Transportbahn 1 sowie einer Förderbahn 2, die in Längsrichtung relativ zur Transportbahn 1 verschiebbar ist, wobei die Förderbahn 2, je nach Erfordernis unter die Transportbahn 1 zumindest bereichsweise verschiebbar ist.

Die ortsfeste Transportbahn 1, ebenso wie die Förderbahn 2 sind als Rollenband mit Rollen 10 ausgebildet und die Transportbahn 1 ortsfest auf Füßen 14 gehalten.

An dem der Förderbahn 2 zugewandten Endbereich der Transportbahn 1 ist ein als Portal ausgebildeter Umsetzer 3 angeordnet, der entlang von Schienen 6 in Längsrichtung verschiebbar ist und zwar zur Entnahme von Transportbehältnissen 11 von der Transportbahn 1 und Absetzen auf der Förderbahn 2, so dass die Schienen 6, auf denen der Umsetzer 3 geführt ist, sowohl in den zugeordneten Endbereich der Transportbahn 1 wie auch in einen Bereich der Förderbahn 2 verschiebbar ist.

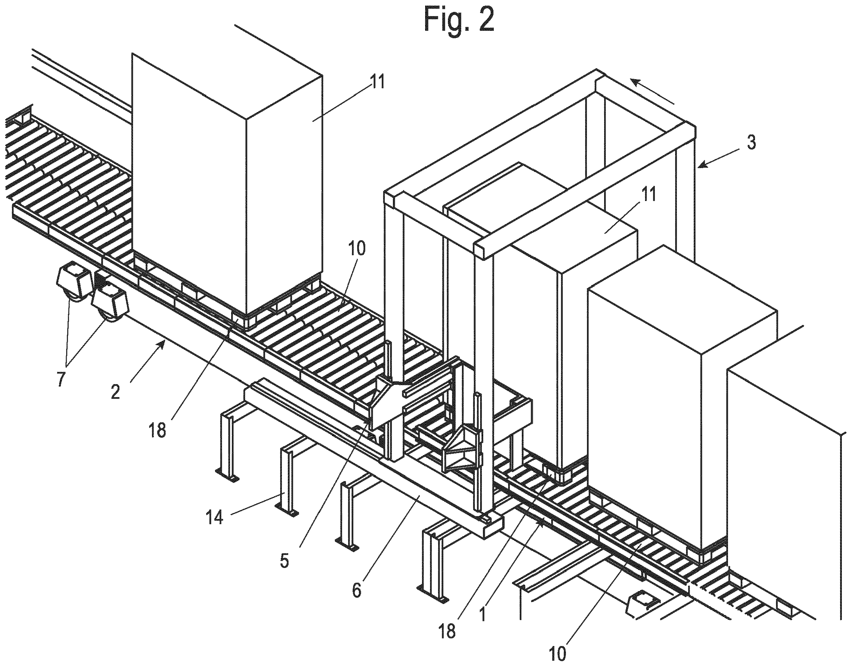

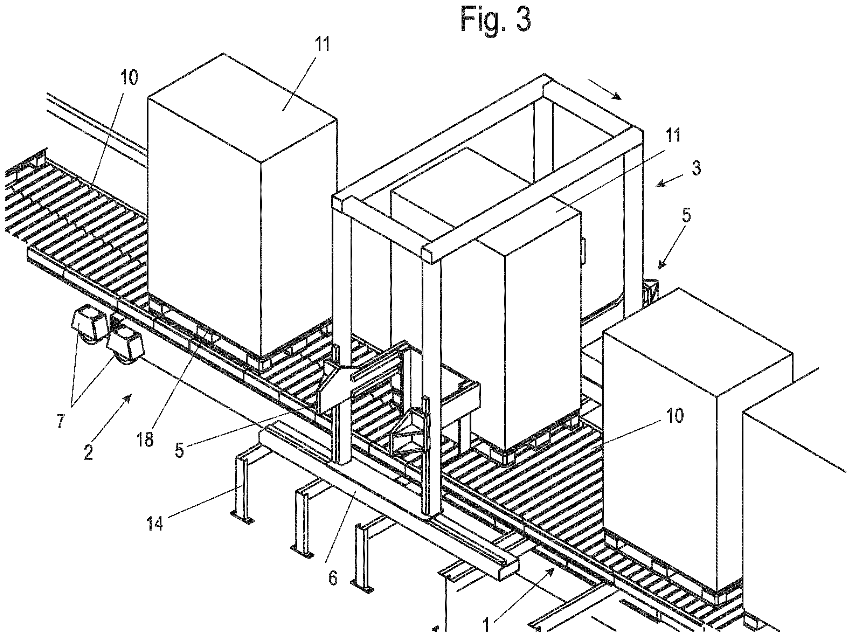

Der Umsetzer 3 weist zwei sich gegenüberliegende Spannelemente 5 auf, die gegeneinander spannbar sind und das umzusetzende Transportbehältnis 10 derart ergreift und von der Transportbahn 1 abhebt, über die Längsschienen 6 bis in Bereich der Förderbahn 2 verfährt und dort absetzt. Dies ist besonders deutlich in den Figuren 2 und 3 zu erkennen, wobei die Figur 2 den Umsetzer 3 in einer Position wiedergibt, in der das Transportbehältnis 11, das im Übrigen unterseitig als Palette 18 ausgebildet ist, von der Transportbahn 1 angehoben wird.

In der Figur 3 ist eine Position dargestellt, in der der Umsetzer 3 so weit verfahren ist, dass das Transportbehältnis 11 in den Überdeckungsbereich mit der Förderbahn 2 gelangt und dort abgesetzt wird.

Die Spannelemente 5 sind vertikal verfahrbar zum Anheben und Absenken des Transportbehältnisses 11. Anstelle solcher Spannelemente 5 können auch Greifelemente vorgesehen sein, alternativ auch Hubgabeln, die das Transportbehältnis untergreifen. Die Hin- und Herbewegung des Umsetzers 3 ist durch Pfeile in den Figuren 2 und 3 angedeutet.

Wie weiter in der Figur 1 zu erkennen ist, ist an dem dem Umsetzer 3 abgewandten Ende der Förderbahn 2 eine Hubeinrichtung 4 vorgesehen, die sowohl quer wie auch längs verfahrbar ist und die Gabelzinken 9 einer Gabel aufweist, die in eine Palette 18 einfahrbar ist.

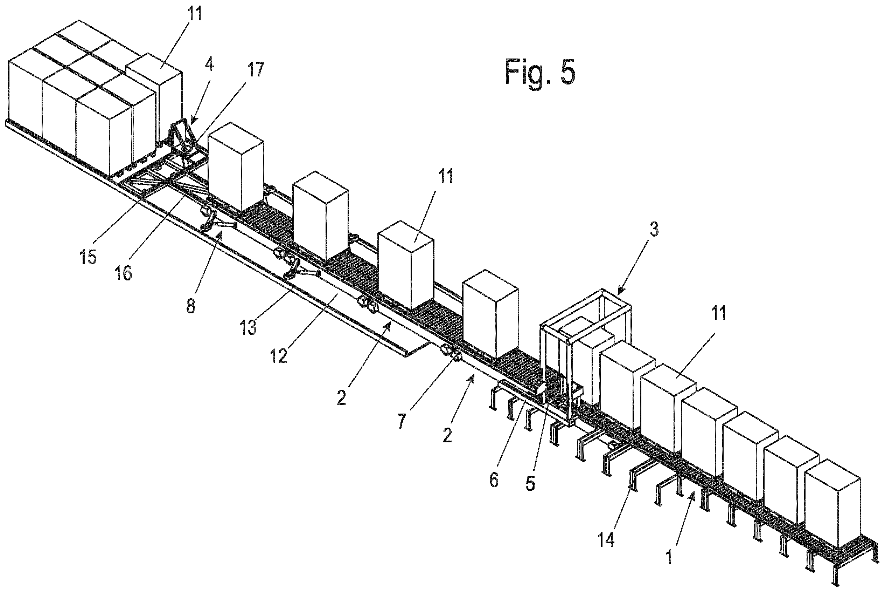

In der Figur 5 ist die Übergabe eines Transportbehältnisses 11 von der Förderbahn 2 auf eine Ladefläche 12 abgebildet, wobei diese Ladefläche 12 sich gegenüberliegende Seitenwände 13 aufweist.

Das Hubelement 4 ist an einem Drehlager 17 gehalten und darüber in einer horizontalen Ebene um 180° verschwenkbar.

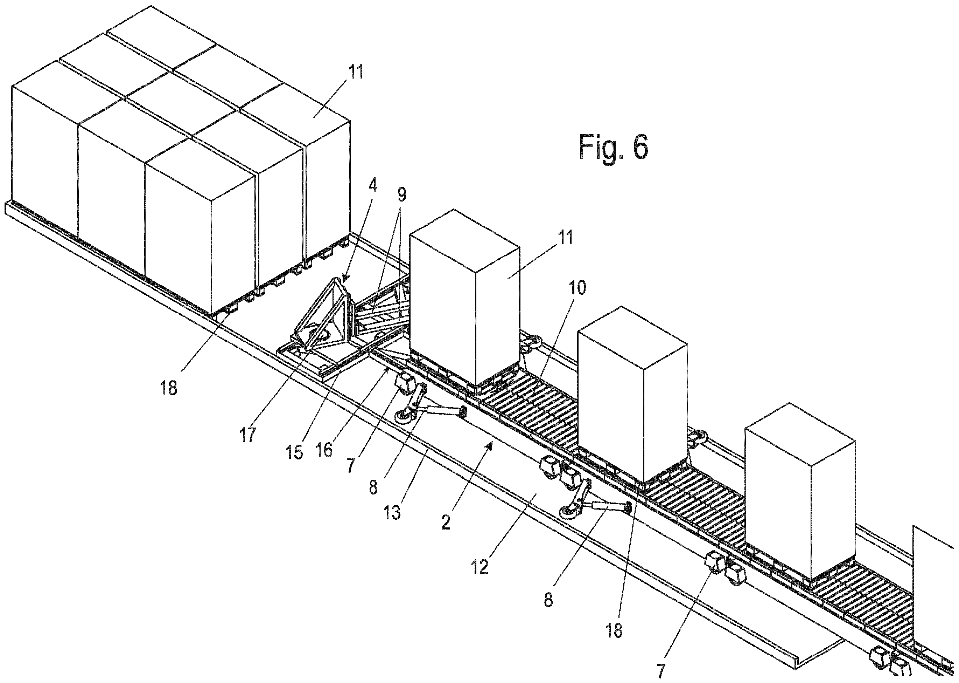

Weiter ist das Hubelement 4 auf einem Schubgestell 16 drehbar befestigt, das wiederum Querschienen 15 aufweist, auf denen das Hubelement 4 quer zur Ladefläche 12 verschiebbar ist. Um das Hubelement 4 nach einem Absetzen des Transportbehältnisses 11 auf der Ladefläche 12 aus seiner Eingriffsposition herausziehen zu können, ist das Schubgestell 16 in die Förderbahn 2 verschiebbar, wie dies in der Figur 6 zu erkennen ist.

An der Förderbahn 2 sind Laufrollen 7 befestigt, mittels derer die Förderbahn 2 in Längsrichtung bewegbar ist.

Seitlich angeschlossene Dämpfer 8 liegen an den Seitenwänden 13 der Ladefläche 12 an und ermöglichen ein seitliches Ausweichen bzw. eine seitliche Korrektur der Lage der Förderbahn 2, wenn die Ladefläche 12 nicht exakt fluchtet.

In den Figuren 5 und 6 ist die gleichgerichtete Übergabe der Transportbehältnisse 11 auf die Ladefläche 12 gezeigt, wobei die Transportbehältnisse 11 im Grundriss rechteckig sind und in gleicher Position auf die Ladefläche 12 übergeben werden.

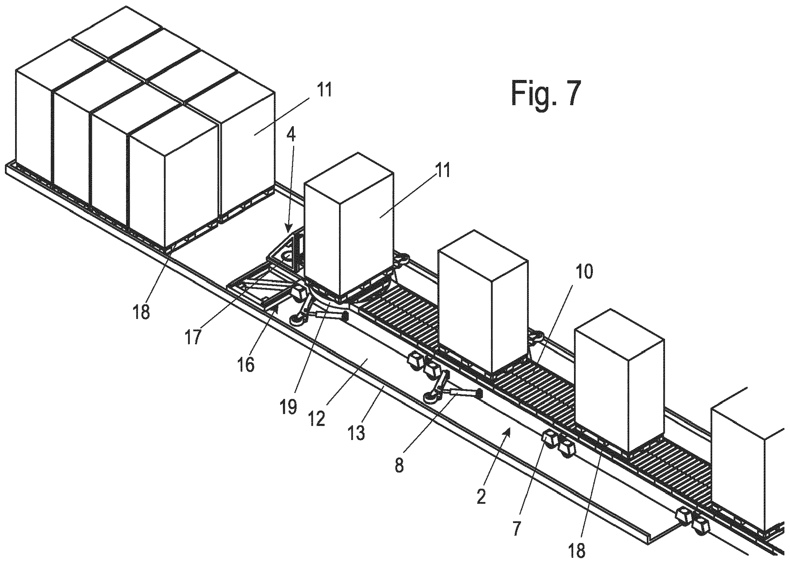

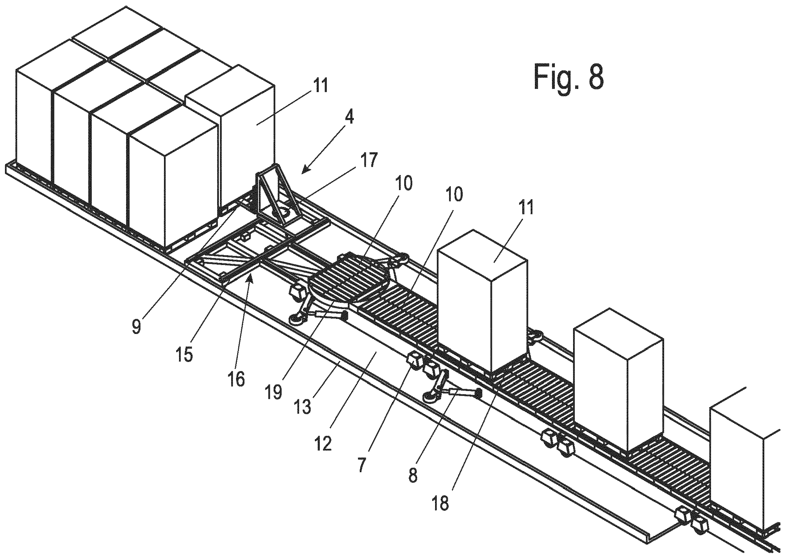

In den Figuren 7 und 8 hingegen sind die Transportbehältnisse 11 mit ihrer Breitseite quer zur Längserstreckung der Ladefläche 12 angeordnet, so dass die um 90° versetzt auf dem zur Förderbahn 2 angeordneten Transportbehältnisse 11 entsprechend verdreht werden müssen.

Hierzu ist ein in der Figur 8 deutlich erkennbarer Drehteller 19 vorgesehen, der ebenfalls mit Rollen 10 versehen ist, die zur Übergabe des jeweiligen Transportbehältnisses 11 von der Förderbahn 2 auf den Drehteller 19 gleichgerichtet sind. Im Beispiel hingegen sind die Rollen 10 in eine Stellung gebracht, in der der Drehteller 19 um 90° verdreht ist, so dass die Breitseite des Transportbehältnisses 11 so ausgerichtet ist wie die auf der Ladefläche 12 bereits befindlichen.

In der Figur 8 ist eine Situation abgebildet, wie sie sich nach einer Entnahme des Transportbehältnisses 11 von dem Drehteller 19 ergibt und die Hubeinrichtung 4 das Transportbehältnis 11 in die Ablageposition auf der Ladefläche 12 gebracht hat.

Um das nächste Transportbehältnis 11 in gleicher Weise auf der Ladefläche 12 ablegen zu können, wird der Drehteller 19 um 90° verschwenkt, bis die Rollen 10 sowohl der Förderbahn 2 wie auch des Drehtellers 19 gleichgerichtet verlaufen.

Die Steuerung des gesamten Be- oder Entladevorgangs, d.h. an welcher Position auf der Ladefläche 12 die Transportbehältnisse 11 abgesetzt oder entnommen werden sollen, kann rechnergestützt erfolgen, gegebenenfalls auch über Sensoren für den Fall, dass die Ladefläche 12 lediglich zusätzlich bestückt werden soll.

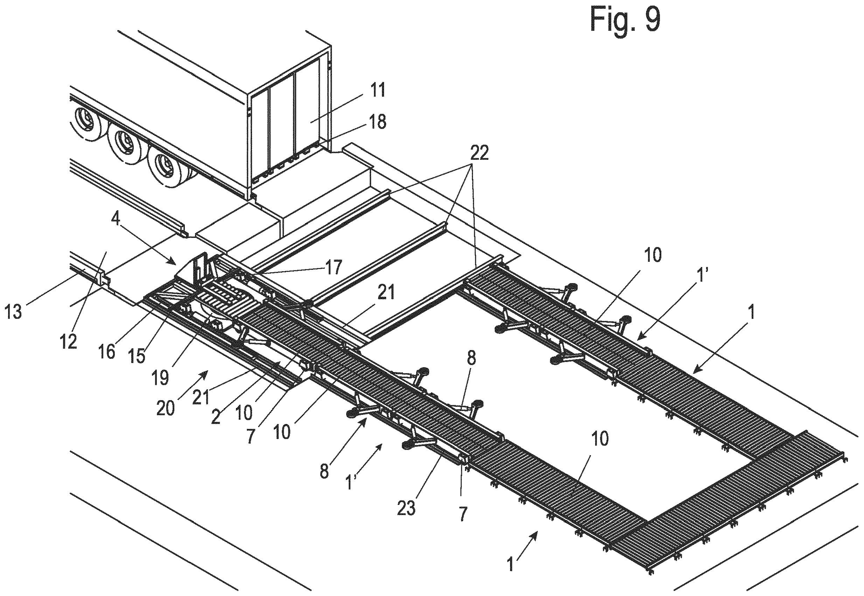

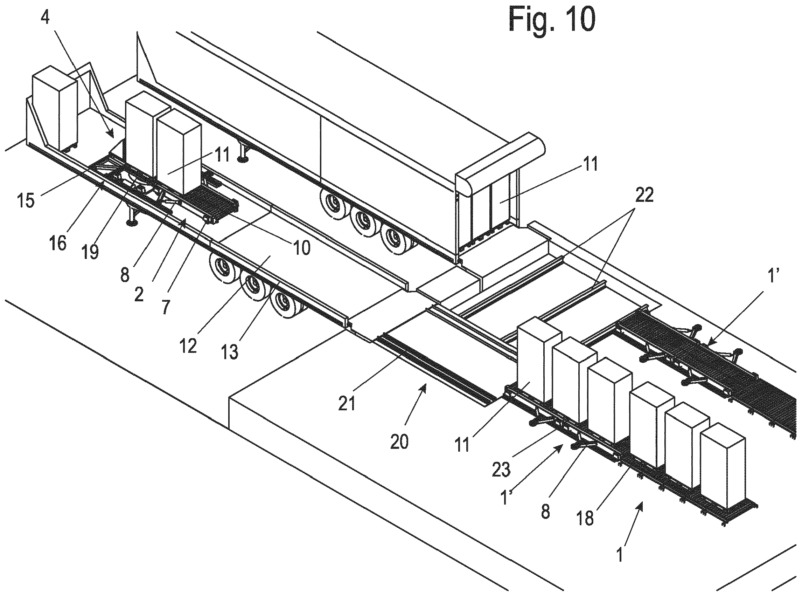

Bei dem in den Figuren 9 bis 12 gezeigten Ausführungsbeispiel der Erfindung sind die ortsfeste Transportbahn 1 und die Förderbahn 2 in einer gemeinsamen horizontalen Ebene angeordnet. Zwischen beiden ist in der selben horizontalen Ebene eine bewegbare Zwischenbahn 1' sozusagen als Zubringer von der ortsfesten Transportbahn 1 hin zur Förderbahn 2 vorgesehen, mit seitlichen Dämpfern 8, vergleichbar denen an der Förderbahn 2 sowie mit Laufrollen 7.

In der Figur 9 ist eine Stellung gezeigt vor einem Beschicken einer Ladefläche 12, die parallel zu einer anderen, bereits befüllten Ladefläche 12 positioniert ist.

In dieser quasi Ausgangsstellung sind noch keine Transportbehältnisse 11 auf der Transportbahn 1, der Zwischenbahn 1' und der Förderbahn 2 abgestellt, wobei sich die Zwischenbahn 1' in Längsrichtung unmittelbar an die ortsfeste Transportbahn 1 und andererseits an die Förderbahn 2. anschließt.

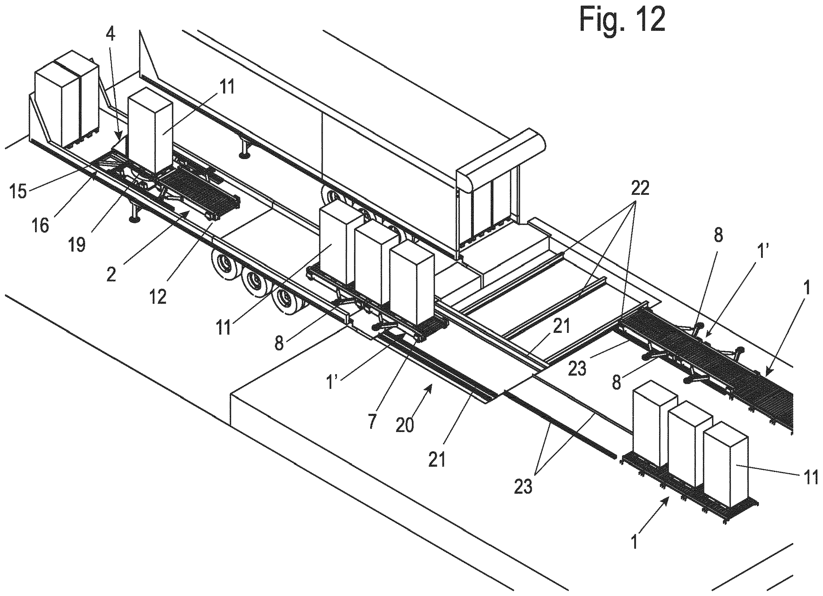

In einer Endstellung außerhalb der Ladefläche 12, wie sie in den Figuren 9 und 12 abgebildet ist, ist die Förderbahn 2 auf einem Schlitten 20 positioniert, der an den sich gegenüberliegenden Längsseiten mit Führungsschienen 21 versehen ist, an denen die Dämpfer 8 anliegen.

Jede der Zwischenbahnen 1' ist zur seitlichen Führung entlang zwei parallel und abständig zueinander angeordneter Führungsholme 23 geführt, die gleichfalls ortsfest sind, wobei die Laufrollen 7 an den einander zugewandten Seiten der Führungsholme 23 zur Führung der Zwischenbahn 1' anliegen.

Ebenso wie die Förderbahn 2 ist auch die Zwischenbahn 1' angetrieben.

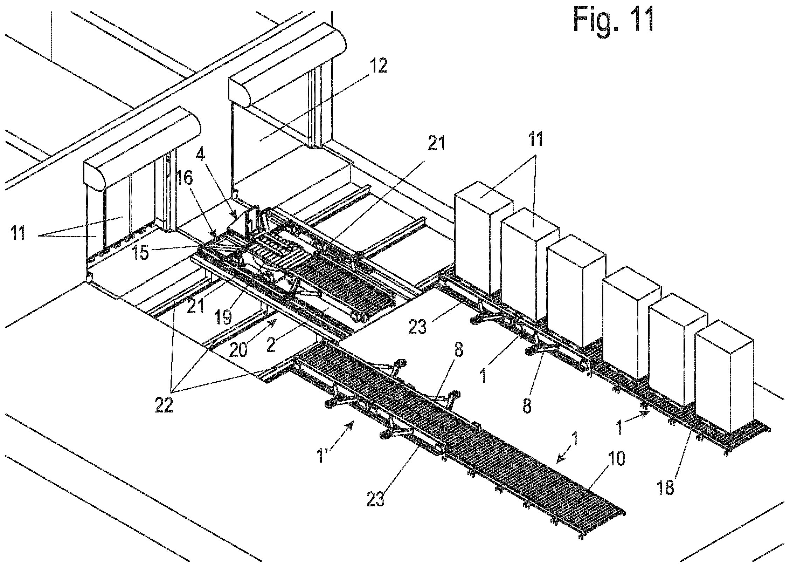

In der Figur 11 ist eine Stellung der Förderbahn 2 wiedergegeben, in der dies von der linksseitigen Ladefläche 12, die mit Transportbehältnissen 11 vollständig bestückt ist, in den Bereich der rechten Ladefläche 12 verschoben wird, um diese Ladefläche 12 mit Transportbehältnissen 11 zu beschicken, die auf der ortsfesten Transportbahn 1 sowie der sich anschließenden Zwischenbahn 1' bereitstehen.

Dabei ist der Schlitten 20, auf dem sich die Förderbahn 2 mitsamt dem Drehteller 19 und der Hubeinrichtung 4 befindet, entlang von Führungsschienen 22, die sich ortsfest quer zur Förderrichtung der Förderbahn 2 so weit erstrecken, dass die Förderbahn 2 sowie die Zwischenbahn 1' in ihre Beschickungsposition gebracht werden können.

Die Figur 12 zeigt eine Situation, in der die Zwischenbahn 1', mit Transportbehältern 11 bestückt, den Schlitten 20 teilweise überfahren hat, ebenso wie die Ladefläche 12, jedoch die Förderbahn 2 noch nicht erreicht hat.

Ein Transportbehältnis 11 ist auf dem Drehteller 19 abgesetzt, so dass die Gabeln der Hubeinrichtung 4 die Palette 18 unterfahren, anheben und in horizontaler Ebene um 180° verschwenken können, wobei die Hubeinrichtung 4 mitsamt dem Transportbehältnis 11 mittels des Schubgestells 16 derart verfahren wird, dass das Transportbehältnis 11 mit der Lücke fluchtet, in die das Transportbehältnis 11 abgesetzt werden soll. Dies erfolgt dadurch, dass, wie zuvor beschrieben, das Schubgestell 16 nach einem Verschwenken in Förderrichtung der Förderbahn 2 verfährt.

### Bezugszeichenliste

- 1: ortsfeste Transportbahn
- 1': Zwischenbahn
- 2: Förderbahn
- 3: Umsetzer
- 4: Hubeinrichtung
- 5: Spannelement
- 6: Längsschiene
- 7: Laufrolle
- 8: Dämpfer
- 9: Gabelzinke
- 10: Rolle
- 11: Transportbehältnis
- 12: Ladefläche
- 13: Seitenwand
- 14: Fuß
- 15: Querschiene
- 16: Schubgestell
- 17: Drehlager
- 18: Palette
- 19: Drehteller
- 20: Schlitten
- 21: Führungsleisten
- 22: Führungsschiene
- 23: Führungsholm

## Patentansprüche

1. Einrichtung zum Be- und Entladen eines eine Ladefläche (12) aufweisenden Nutzfahrzeuges oder eines Containers, mit einer in Längsrichtung verfahrbaren Förderbahn (2), in deren einem Endbereich ein in Längsrichtung relativ dazu bewegbares Schubgestell (16) gehalten ist, das eine in horizontaler Ebene verschwenkbare Hubeinrichtung (4) trägt, die quer zur Längserstreckung der Förderbahn (2) bewegbar ist, **dadurch gekennzeichnet, dass** an der Förderbahn (2) Laufrollen (7) befestigt sind, mittels derer die Förderbahn (2) in Längsrichtung bewegbar ist.

2. Einrichtung nach Anspruch 1, **dadurch gekennzeichnet, dass** an dem der Hubeinrichtung (4) zugewandten Ende der Förderbahn (2) ein Drehteller (19) angeordnet ist, der zumindest um 90° in horizontaler Ebene verdrehbar ist.

3. Einrichtung nach Anspruch 2, **dadurch gekennzeichnet, dass** die Hubeinrichtung (4) Hubelemente, insbesondere Gabelzinken (9) einer Gabel aufweist, die in verschwenkter Stellung in den Bereich des Drehtellers (19) ragen.

4. Einrichtung nach Anspruch 1, **dadurch gekennzeichnet, dass** eine ortsfeste Transportbahn (1) vorgesehen ist, die in Funktionsstellung der Förderbahn (2) mit dieser fluchtet.

5. Einrichtung nach Anspruch 4, **dadurch gekennzeichnet, dass** zwischen der ortsfesten Transportbahn (1) und der Förderbahn (2) eine in Längsrichtung bewegbare Zwischenbahn (1') angeordnet ist, die in Funktionsstellung der Förderbahn (2) mit dieser und der ortsfesten Transportbahn (1) fluchtet, wobei die ortsfeste Transportbahn (1), die Zwischenbahn (1') und die Förderbahn (2) in einer gemeinsamen horizontalen Ebene verlaufen.

6. Einrichtung nach einem der vorhergehenden Ansprüche, **dadurch gekennzeichnet, dass** zur Beschickung mehrerer nebeneinander liegender Ladeflächen (12) ein auf Führungsschienen (22) geführter Schlitten (20) vorgesehen ist, der quer zur Förderrichtung bewegbar ist.

7. Einrichtung nach Anspruch 4, **dadurch gekennzeichnet, dass** an der ortsfesten Transportbahn (1) ein längs verschieblich dazu gehaltener, verstellbare Hubmittel aufweisender Umsetzer (3) vorgesehen ist, der die Förderbahn (2) in Funktion zumindest bereichsweise überfährt.

8. Einrichtung nach Anspruch 7, **dadurch gekennzeichnet, dass** die Hubmittel horizontal und vertikal verstellbar sind.

9. Einrichtung nach Anspruch 5, **dadurch gekennzeichnet, dass** die Zwischenbahn (1') Laufrollen (7) aufweist.

10. Einrichtung nach Anspruch 4, **dadurch gekennzeichnet, dass** die Förderbahn (2) zumindest bereichsweise unter die ortsfeste Transportbahn (1) verschiebbar ist.

11. Einrichtung nach Anspruch 7 oder 8 **dadurch gekennzeichnet, dass** der Umsetzer (3) auf ortsfesten Längsschienen (6) und die Zwischenbahn (1') auf ortsfesten Führungsholmen (23) gelagert ist, die sich in Förderrichtung an die ortsfeste Transportbahn (1) anschlie-ßen.

12. Einrichtung nach Anspruch 5, **dadurch gekennzeichnet, dass** an den beiden Längsseiten der Förderbahn (2) und der Zwischenbahn (1 ') Dämpfer (8) angeordnet sind.

13. Einrichtung nach Anspruch 7, **dadurch gekennzeichnet, dass** der Umsetzer (3) als Portal ausgebildet ist.

14. Einrichtung nach Anspruch 5, **dadurch gekennzeichnet, dass** die ortsfeste Transportbahn (1), die Zwischenbahn (1') und die Förderbahn (2) als Rollenförderer, Kettenförderer oder dergleichen ausgebildet sind.

## Claims

1. Device for loading and unloading a commercial vehicle or a container having a loading surface (12), with a conveyor track (2) which is movable in the longitudinal direction and in one end region of which a push frame (16) which is movable relative thereto in the longitudinal direction is held, which carries a lifting device (4) which can be pivoted in the horizontal plane and which can be moved transversely to the longitudinal extent of the conveyor track (2), **characterised in that** rollers (7) are fastened to the conveyor track (2), by means of which rollers the conveyor track (2) can be moved in the longitudinal direction.

2. Device according to claim 1, **characterised in that** a turntable (19) is arranged at the end of the conveyor track (2) facing the lifting device (4), which turntable can be rotated by at least 90° in the horizontal plane.

3. Device according to claim 2, **characterised in that** the lifting device (4) has lifting elements, in particular fork tines (9) of a fork, which project into the region of the turntable (19) in the pivoted position

4. Device according to claim 1, **characterised in that** a stationary transport path (1) is provided, which is aligned with the conveyor path (2) in the functional position of the latter.

5. Device according to claim 4, **characterised in that** an intermediate track (1 ') movable in the longitudinal direction is arranged between the stationary conveyor track (1) and the conveyor track (2), which intermediate track is aligned with the conveyor track (2) and the stationary conveyor track (1) in the functional position of the latter, wherein the stationary conveyor track (1), the intermediate track (1 ') and the conveyor track (2) run in a common horizontal plane.

6. Device according to one of the preceding claims, **characterised in that** a carriage (20), which is guided on guide rails (22) and can be moved transversely to the conveying direction, is provided for feeding a plurality of adjacent loading surfaces (12).

7. Device according to claim 4, **characterised in that** a transfer device (3) is provided on the stationary conveyor track (1), which is held so as to be longitudinally displaceable relative thereto and has adjustable lifting means, which transfer device passes over the conveyor track (2) in operation at least in certain areas.

8. Device according to claim 7, **characterised in that** the lifting means are horizontally and vertically adjustable.

9. Device according to claim 5, **characterised in that** the intermediate track (1') has rollers (7).

10. Device according to claim 4, **characterised in that** the conveyor track (2) can be displaced under the stationary conveyor track (1) at least in certain areas.

11. Device according to claim 7 or 8, **characterised in that** the transfer unit (3) is mounted on stationary longitudinal rails (6) and the intermediate track (1 ') is mounted on stationary guide rails (23), which are connected to the stationary conveyor track (1) in the conveying direction.

12. Device according to claim 5, **characterised in that** dampers (8) are arranged on the two longitudinal sides of the conveyor track (2) and the intermediate track (1 ').

13. Device according to claim 7, **characterised in that** the transfer device (3) is designed as a portal.

14. Device according to claim 5, **characterised in that** the stationary conveyor track (1), the intermediate track (1 ') and the conveyor track (2) are designed as roller conveyors, chain conveyors or the like.

## Revendications

1. Dispositif de chargement et de déchargement d'un véhicule utilitaire présentant une zone de chargement (12) ou d'un conteneur, muni d'un convoyeur (2) mobile dans le sens longitudinal, dont une partie d'extrémité comporte un bâti de poussée (16) mobile par rapport à celle-ci dans le sens longitudinal, qui porte un dispositif de levage (4) capable de pivotement dans un plan horizontal et mobile transversalement par rapport à la longueur du convoyeur (2), **caractérisé en ce que** sont fixés sur le convoyeur (2) des galets (7) au moyen desquels le convoyeur (2) est mû dans le sens longitudinal.

2. Dispositif selon la revendication 1, **caractérisé en ce qu'**est disposé à l'extrémité du convoyeur (2) tournée vers le dispositif de levage (4) un plateau tournant (19) qui peut tourner d'au moins 90° dans le plan horizontal.

3. Dispositif selon la revendication 2, **caractérisé en ce que** le dispositif de levage (4) comporte des éléments de levage, en particulier des fourchons (9) d'une fourche, qui dépassent, dans la position pivotée, dans la zone du plateau tournant (19).

4. Dispositif selon la revendication 1, **caractérisé en ce qu'**il est prévu un transporteur stationnaire (1) qui est aligné avec le convoyeur (2) dans la position de fonctionnement de celui-ci.

5. Dispositif selon la revendication 4, **caractérisé en ce qu'**est disposé entre la transporteur stationnaire (1) et le convoyeur (2) un convoyeur intermédiaire (1') mobile dans le sens longitudinal, qui est aligné avec le convoyeur (2) et le transporteur stationnaire (1) dans la position de fonctionnement du convoyeur, le transporteur stationnaire (1), le convoyeur intermédiaire (1') et le convoyeur (2) se trouvant dans un plan horizontal commun.

6. Dispositif selon l'une des revendications précédentes, **caractérisé en ce que**, afin de garnir plusieurs zones de chargement (12) situées les unes à côté des autres, il est prévu un chariot (20) guidé sur des rails de guidage (22) qui peut se déplacer transversalement par rapport au sens de convoyage.

7. Dispositif selon la revendication 4, **caractérisé en ce qu'**est prévu sur le transporteur stationnaire (1) un transbordeur (3) retenu avec possibilité de translation longitudinale par rapport à celui-ci et comportant des moyens de levage réglables, qui passe au moins en partie au-dessus du convoyeur (2) en fonctionnement.

8. Dispositif selon la revendication 7, **caractérisé en ce que** les moyens de levage sont réglables à l'horizontale et à la verticale.

9. Dispositif selon la revendication 5, **caractérisé en ce que** le convoyeur intermédiaire (1') comporte des galets (7).

10. Dispositif selon la revendication 4, **caractérisé en ce que** le convoyeur (2) peut se déplacer, au moins en partie, sous le transporteur stationnaire (1).

11. Dispositif selon la revendication 7 ou 8, **caractérisé en ce que** le transbordeur (3) est supporté sur des rails longitudinaux stationnaires (6) et le convoyeur intermédiaire (1') sur des longerons de guidage stationnaires (23) qui font suite au transporteur stationnaire (1) dans le sens de convoyage.

12. Dispositif selon la revendication 5, **caractérisé en ce que** des amortisseurs (8) sont disposés sur les deux côtés longitudinaux du convoyeur (2) et du convoyeur intermédiaire (1').

13. Dispositif selon la revendication 7, **caractérisé en ce que** le transbordeur (3) est conformé comme un portique.

14. Dispositif selon la revendication 5, **caractérisé en ce que** le transporteur stationnaire (1), le convoyeur intermédiaire (1') et le convoyeur (2) sont conformés comme des convoyeurs à rouleaux, des convoyeurs à chaîne ou similaires.
